# EUROPEAN PATENT APPLICATION

(11) **EP 2 023 429 A1**
(43) Date of publication of application: **11.02.2009**
(21) Application number: 07737192.0
(22) Date of filing: 21.05.2007
(51) Int. Cl.: H01M 8/04, H01M 8/02, H01M 8/10

(54) **FUEL CELL COUPLER AND FUEL CELL USING SAME**

(30) Priority: 22.05.2006 JP 2006141403
(71) Applicant: Kabushiki Kaisha Toshiba, Minato-ku, Tokyo 105-8001 (JP); Toyo Seikan Kaisha, Ltd., Tokyo 100-8522 (JP)
(72) Inventor: TAKAHASHI, Kenichi, Tokyo 105-8001 (JP); KAWAMURA, Koichi, Tokyo 105-8001 (JP); YOSHIHIRO, Kenji, Yokohama-shi, Kanagawa 230-0001 (JP); YAMAMORI, You, Yokohama-shi, Kanagawa 230-0001 (JP)
(74) Representative: Henkel, Feiler & Hänzel
(86) International application number: PCT/JP2007/000536
(87) International publication number: WO 2007/135775

(57) **Abstract**

A fuel cell coupler includes a socket section (4) which has a socket body (32) set in a fuel cell and a valve mechanism disposed within the socket body, and to which a nozzle section (8) attached to a fuel cartridge is detachably connected. The socket section (4) is provided with a nozzle holding mechanism (43) which has a hook portion (44) protruded inward of the socket body (32) and can retract toward the outside of the socket body (32), and an elastic member (45) which applies a pressing force to the hook portion (4) to hold the nozzle section (8) and allows the hook portion (44) to retract.

## Description

### Technical Field

The present invention relates to a fuel cell coupler and a fuel cell using the same.

### Background Art

Attempts have been made to use a fuel cell as a power source for various types of portable electronic equipment such as a notebook computer, a cellular phone and the like to make it possible to use them for a long time without recharging. The fuel cell has characteristics that electricity can be generated by merely supplying a fuel and air and generated continuously for a long time by replenishing the fuel. Therefore, the fuel cell is a very advantageous system as a power source for portable electronic equipment if it can be made compact.

Since a direct methanol fuel cell (DMFC) using a methanol fuel having a high energy density can be made compact and its fuel can be handled with ease, it is promising as the power source for portable appliances. As a method of supply the liquid fuel to the DMFC, there are known active methods such as a gas supply type, a liquid supply type and the like and passive methods such as an inside vaporization type and the like to supply the liquid fuel from a fuel tank to a fuel electrode by vaporizing in the battery cells. The passive method is advantageous for miniaturization of the DMFC.

A passive DMFC of an internal vaporization type or the like vaporizes a liquid fuel stored in a fuel storing section via, for example, a fuel-impregnated layer and a fuel vaporization layer, to supply the vaporized component of the liquid fuel to a fuel electrode (see References 1 and 2). The liquid fuel is supplied to the fuel storing section by means of a fuel cartridge. For a satellite type (external injection type) fuel cartridge, a coupler provided with a socket section and a nozzle section each having a valve mechanism therein is used to stop and inject the liquid fuel (see Reference 3).

It is being studied to hold the connected state of the nozzle section and the socket section of the fuel cell coupler by a retention mechanism using, for example, a spring formed of a metal wire rod or plate material. When this retention mechanism is applied, the spring might be deformed to a plastic region if a force of bending, twisting or the like acts on the fuel cartridge connected to the fuel cell. This means damage to the retention mechanism and further to the socket section. Besides, there is a possibility of damaging the nozzle section when the spring of the retention mechanism is deformed.
[Reference 1] JP-B 3413111(PATENT)
[Reference 2] JP-A 2004-171844(KOKAI)
[Reference 3] JP-A 2004-127824(KOKAI)

### Summary of the Invention

The present invention provides a fuel cell coupler whose connected state can be released without damaging a socket section, and a fuel cell whose durability, reliability, safety and the like are enhanced by applying the coupler.

A fuel cell coupler according to an aspect of the present invention comprises a socket section, detachably connected with a nozzle section to be fitted to a fuel cartridge, including a socket body set in a fuel cell and a valve mechanism disposed within the socket body, wherein the socket section is provided with a nozzle holding mechanism having a hook portion protruded inward of the socket body and retractable outward of the socket body, and an elastic body applying a pressing force to the hook portion to hold the nozzle section and allowing retraction of the hook portion.

A fuel cell according to an aspect of the present invention comprises a socket section, detachably connected to a nozzle section of a fuel cartridge, including a socket body, a valve mechanism disposed in the socket body, and a nozzle holding mechanism having a hook portion protruded inward of the socket body and retractable outward of the socket body and an elastic body applying a pressing force to the hook portion to hold the nozzle section and allowing retraction of the hook portion, a fuel storing section for storing the liquid fuel supplied from the fuel cartridge connected to the socket section, and a power generation section for performing a power generation operation by receiving the fuel from the fuel storing section.

### Brief Description of Drawings

[FIG. 1] Fig. 1 is a diagram showing a schematic structure of a fuel cell according to an embodiment of the present invention.
[FIG. 2] Fig. 2 is a sectional view showing a structure (unconnected state) of a socket section of the fuel cell and a nozzle section of a fuel cartridge shown in Fig. 1.
[FIG. 3] Fig. 3 is a sectional view showing a connected state of the socket section and the nozzle section shown in Fig. 2.
[FIG. 4] Fig. 4 is a sectional view showing a rubber holder of the socket section shown in Fig. 2.
[FIG. 5] Fig. 5 is a perspective view showing a structure of the socket section shown in Fig. 2.
[FIG. 6] Fig. 6 is a perspective view showing a structure of a hook portion of a nozzle holding mechanism of the socket section shown in Fig. 5.
[FIG. 7] Fig. 7 is a sectional view showing a structure of an internal vaporization type DMFC as an example of the fuel cell shown in Fig. 1.

### Explanation of Reference Numerals

1: Fuel cell, 2: power generation section, 3: fuel storing section, 4: socket section, 5: fuel supply section, 6: fuel cartridge, 7: cartridge body, 8: nozzle section, 12: nozzle head, 13: base section, 14: tip end portion, 16: peripheral groove, 17: key portion, 18: valve holder, 19, 38: valve, 19a, 38a: valve head, 19b, 38b: valve stem, 20, 39: valve seat, 21, 40: O-ring, 22, 41: compression spring, 31: nozzle inserting portion, 32: socket body, 33: outer peripheral portion, 34: middle body part, 35: lower body part, 37: rubber holder, 43: nozzle holding mechanism, 44: hook portion, 44a: projecting portion, 44b: flange, 45: rubber-like elastic member, 46: key groove.

### Best Mode for Carrying out the Invention

Modes of conducting the present invention will be described below with reference to the drawings. Embodiments of the present invention are described with reference to the drawings, which are provided for illustration only, and the present invention is not limited to the drawings.

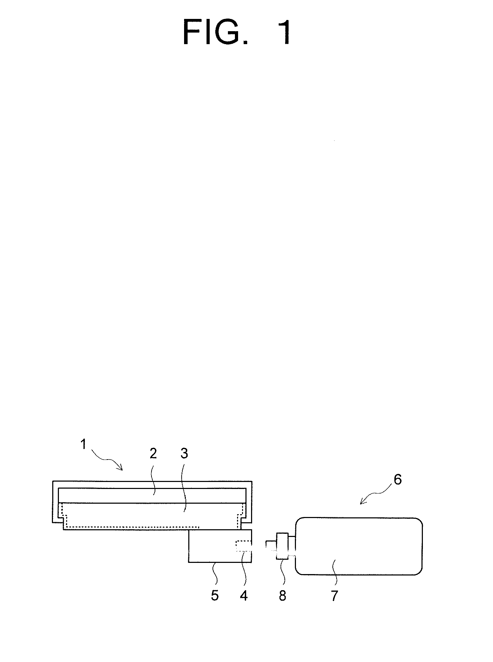

Fig. 1 shows a schematic structure of a fuel cell according to an embodiment of the present invention and a combined structure of the fuel cell and a fuel cartridge. The fuel cell 1 shown in Fig. 1 is mainly comprised of a power generation section 2 and a fuel storing section 3. A fuel supply section 5 having a socket section 4 which becomes a liquid fuel supply port is provided on the under surface of the fuel storing section 3. The socket section 4 has a v alve mechanism therein and is in a closed state except when the liquid fuel is supplied. The fuel cell 1 may have a structure that the liquid fuel is supplied directly from the fuel supply section 5 to the power generation section 2 without through the fuel storing section 3.

A fuel cartridge 6 has a cartridge body (container) 7 for storing a liquid fuel for the fuel cell. A nozzle section 8 which is a fuel discharge port to supply the liquid fuel from the cartridge body to the fuel cell 1 is provided at a tip end of the cartridge body 7. The nozzle section 8 has a valve mechanism therein which is in a closed state except when the liquid fuel is supplied. The fuel cartridge 6 is a so-called satellite type (external injection type) fuel cartridge and connected to the fuel cell 1 only when the liquid fuel is injected into the fuel storing section 3.

The cartridge body 7 of the fuel cartridge 6 stores the liquid fuel for the fuel cell 1. In a case where the fuel cell 1 is a direct methanol fuel cell (DMFC), methanol fuels such as aqueous methanol solutions having various concentrations, pure methanol and the like can be used for the liquid fuel. The liquid fuel stored in the cartridge body 7 is not necessarily limited to the methanol fuel but may be another liquid fuel, for example, an ethanol fuel such as an aqueous ethanol solution or pure ethanol, a propanol fuel such as an aqueous propanol solution or pure propanol, a glycol fuel such as an aqueous glycol solution or pure glycol, dimethyl ether, formic acid, or the like. At any event, the cartridge body 7 stores a liquid fuel suitable for the fuel cell 1.

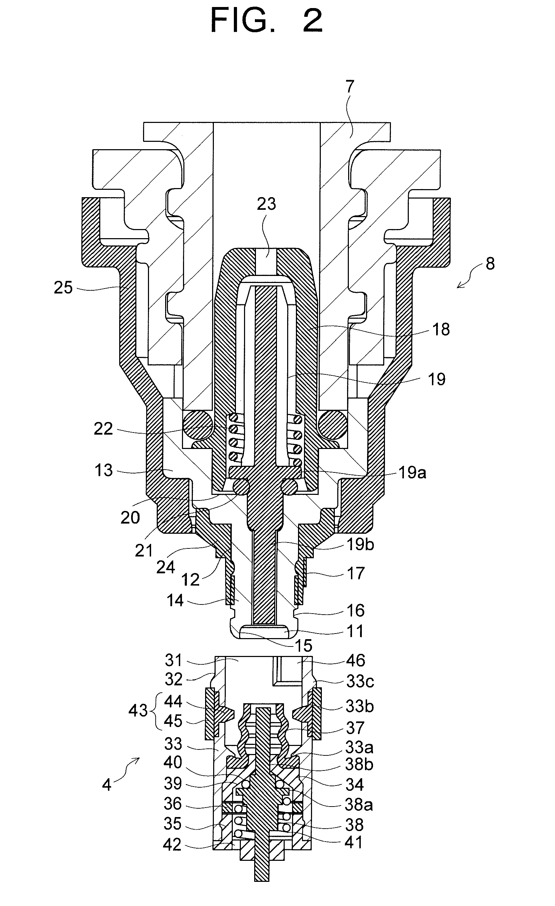

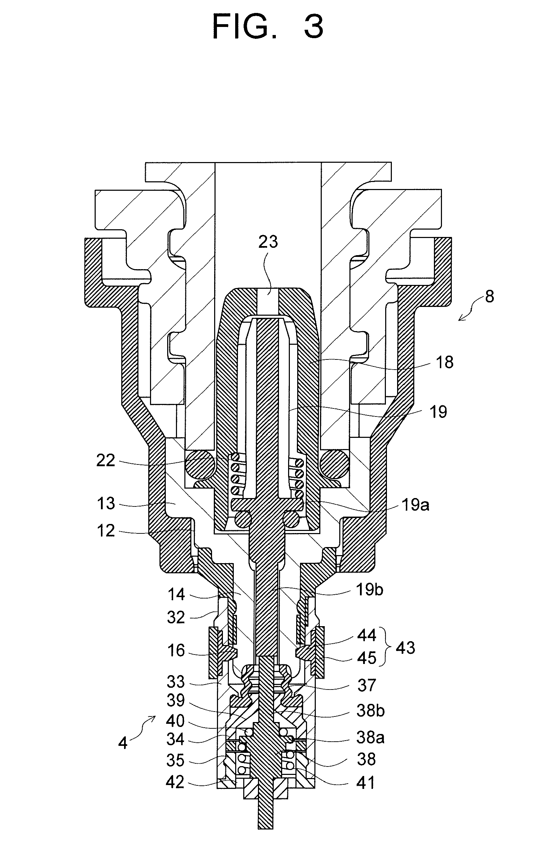

The fuel cell coupler of this embodiment is provided with the socket section 4 which is set in the fuel storing section 3 of the fuel cell 1. The fuel cell coupler is also provided with the nozzle section 8 which is disposed on the cartridge body 7 of the fuel cartridge 6 to configure a connection mechanism between the fuel cell 1 and the fuel cartridge 6. A specific structure of the fuel cell coupler is described with reference to Fig. 2 and Fig. 3. Fig. 2 shows a state that the nozzle section 8 of the fuel cartridge 6 is not connected to the socket section 4 of the fuel cell 1, and Fig. 3 shows a state that the nozzle section 8 is connected to the socket section 4.

In the coupler for connecting the fuel cell 1 and the fuel cartridge 6, the nozzle section (male coupler/plug) 8 as a connection mechanism on the side of the fuel cartridge 6 has a nozzle head 12 with a nozzle opening 11 opened at a tip end. The nozzle head 12 has a base section 13 which is fitted to an opening portion of the cartridge body 7, and a tip end portion 14 which is inserted into the socket section 4. The cylindrical tip end portion 14 is formed to protrude from the base section 13 such that its axial direction becomes parallel to the insert direction of the nozzle section 8.

A recessed portion 15 is formed in a top surface of the tip end portion 14 of the nozzle head 12. The recessed portion 15 is formed by recessing the top surface of the tip end portion 14, and the nozzle opening 11 is formed in the bottom surface of the recessed portion 15. Since the recessed portion 15 functions as a storing portion for the liquid fuel remaining (adhering) on the tip end of the nozzle section 8, an operator is free from touching the liquid fuel. A peripheral groove 16 for engagement with a nozzle holding mechanism of the socket section 4 described later and a key portion 17 which functions as a fuel identification means are formed on an external peripheral surface of the tip end portion 14 of the nozzle head 12. The fuel identification means is configured of the key portion 17 and a key groove which is on the side of the socket section 4.

A cup-like valve holder 18 is disposed within the base section 13 of the nozzle head 12. The valve holder 18 defines a valve chamber and is fixed with the outer edge portion of its tip end held between the cartridge body 7 and the base section 13. A valve 19 is disposed within the valve holder 18. The valve 19 is provided with a valve head 19a and a valve stem 19b. The valve head 19a is disposed within the valve chamber defined by the valve holder 18. The valve stem 19b is housed within the tip end portion 14.

The valve 19 having the valve head 19a and the valve stem 19b is movable back and forth in an axial direction (insert direction of the nozzle section 8). An O-ring 21 is disposed between the valve head 19a and a valve seat 20 formed within the base section 13. A force to press the valve head 19a to the valve seat 20 by an elastic body such as a compression spring 22 or the like is applied to the valve 19, thereby pressing the O-ring 21.

In a normal state (state that the fuel cartridge 6 is separated from the fuel cell 1), the O-ring 21 is pressed to the valve seat 20 via the valve head 19a to close the fuel passage in the nozzle section 8. When the fuel cartridge 6 is connected to the fuel cell 1, the valve stem 19b retracts to separate the valve head 19a from the valve seat 20, and the fuel passage in the nozzle section 8 is put in an open state. A communication hole 23 which is a liquid fuel passage is formed in the bottom of the valve holder 18, and the liquid fuel stored in the cartridge body 7 flows into the nozzle section 8 through the communication hole 23.

A key ring (ring-shaped member) 24 having a cam mechanism and a container nozzle 25 are also disposed on the outer surface of the nozzle head 12. The key ring 24 is press-fitted into the nozzle head 12 during ordinary use. Application of force of bending, twisting or the like when the fuel cartridge 6 is in connection with the fuel cell 1 causes rotational rising of the key ring 24 by means of the cam mechanism to release the connected state between the socket section 4 and the nozzle section 8. For example, the container nozzle 25 is screwed onto the cartridge body 7, so that the nozzle section 8 having the nozzle head 12, the valve 19 and the like is fixed to the tip end portion of the cartridge body 7.

The socket section (female coupler/socket) 4 as a connection mechanism on the side of the fuel cell 1 is provided with a socket body 32 having a recessed nozzle inserting portion 31. The substantially cylindrical socket body 32 is mainly composed of an outer peripheral portion (such as a metal socket) 33 having a substantially cylindrical shape, and a middle body part 34 and a lower body part 35 which are provided within the outer peripheral portion 33. The outer peripheral portion 33 has a ring-shaped projected portion 33a and a through hole 33b. A gasket 36 is interposed between the middle body part 34 and the lower body part 35 to enhance airtightness of the valve chamber defined by them. They are integrally provided within the fuel supply section 5 of the fuel cell 1.

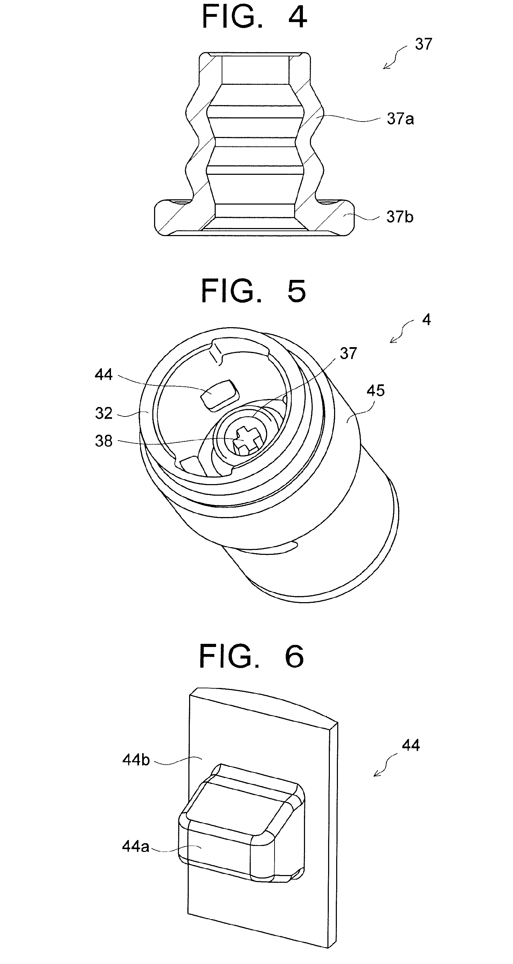

A rubber holder 37 is mounted as an elastic holder on the middle body part 34 in the socket body 32. The rubber holder 37 has a holder body 37a which is elasticized in an axial direction on the basis of its bellows-like shape and material property (rubber elasticity), and a flange portion 37b which is provided below it as shown in Fig. 4. The rubber holder 37 is fixed as the flange portion 37b is held between the ring-shaped projected portion 33a of the outer peripheral portion 33 and the middle body part 34. The outer circumference of the flange portion 37b is formed to have a lip shape in order to enhance sealing properties.

The rubber holder 37 is a sealing member which seals the nozzle head 12 by fitting its tip end to the recessed portion 15 which is formed in the tip end portion 14 of the nozzle head 12. The rubber holder 37 has a fuel passage therein. The rubber holder 37 is a sealing member for sealing between the outside and the fuel passage at the time of opening the valve mechanism of the socket section 4. The recessed portion 15 also has a function to form a seal when it is fitted to the tip end portion of the rubber holder 37. The tip end portion of the rubber holder 37 has a lip shape to enhance sealing properties.

A valve 38 is disposed within the socket body 32. The valve 38 is provided with a valve head 38a and a valve stem 38b. The valve head 38a is disposed within the valve chamber which is defined by the middle body part 34 and the lower body part 35. The valve stem 38b is housed in the rubber holder 37. The valve 38 is movable back and forth in the axial direction (insert direction of the nozzle section 8). An O-ring 40 is disposed between the valve head 38a and a valve seat 39 which is formed on the under surface of the middle body part 34.

A force for pressing the valve head 38a to the valve seat 39 by an elastic body such as a compression spring 41 or the like is always applied to the valve 38 to press the O-ring 40. In a normal state (state that the fuel cartridge 6 is separated from the fuel cell 1), the O-ring 40 is pressed to the valve seat 39 via the valve head 38a. Thus, the fuel passage in the socket section 4 is put in a closed state. When the fuel cartridge 6 is connected to the fuel cell 1, the valve stem 38b retracts to separate the valve head 38a from the valve seat 39, and the fuel passage in the socket section 4 is put in an open state.

The lower body part 35 of the socket body 32 is provided with a communication hole 42 which is connected to the fuel storing section 3 through the fuel supply section 5. In the socket section 4, the fuel passage within the socket body 32 is connected to the fuel storing section 3 through the communication hole 42 formed in the lower body part 35. Then, the valves 19, 38 are put in an open state to open the fuel passages in the nozzle section 8 and the socket section 4 to enable to inject the liquid fuel stored in the fuel cartridge 6 into the fuel storing section 3 through the nozzle section 8 and the socket section 4.

A nozzle holding mechanism 43 for holding the nozzle section 8 inserted in the socket section 4 is disposed on the outer peripheral portion 33 of the socket body 32 as shown in Fig. 2, Fig. 3 and Fig. 5. The nozzle holding mechanism 43 holds the connected state of the socket section 4 and the nozzle section 8. The nozzle holding mechanism 43 has a hook portion 44 which is protruded in the radial direction toward the inside of the outer peripheral portion 33, and an elastic body 45 which applied a pressing force to the hook portion 44 so as to hold the nozzle section 8.

The hook portion 44 of the nozzle holding mechanism 43 has a projecting portion 44a which is protruded inward of the outer peripheral portion 33 and a flange portion 44b which is provided to hold a posture of the projecting portion 44a as shown in Fig. 6. The projecting portion 44a has a tapered shape which becomes narrower toward the tip end. The projecting portion 44a of the hook portion 44 is inserted from the outside of the outer peripheral portion 33 into the through hole 33b to protrude in the radial direction toward the inside of the outer peripheral portion 33. The flange portion 44b of the hook portion 44 is disposed on the outer surface of the outer peripheral portion 33 to hold the posture of the projecting portion 44a which is protruded inward of the outer peripheral portion 33.

The elastic body 45 is disposed on the outer surface of the hook portion 44 to apply a pressing force. As the elastic body 45, a spring material or a rubber-like elastic member is provided to apply the elastic force in the radial direction of the outer peripheral portion 33. Among them, it is preferable to use the rubber-like elastic member in view of reduction of an installation space, ease of fixing and the like. The rubber-like elastic member (rubber sleeve) 45 having a sleeve shape is used in this embodiment. The rubber-like elastic member 45 having a sleeve shape is fitted along the circumferential direction of the outside wall surface of the outer peripheral portion 33 so as to cover the flange portion 44b of the hook portion 44. A rib 33c is disposed on the outer surface of the outer peripheral portion 33 to define the arranged position of the rubber-like elastic member 45 having the sleeve shape.

An elastomer (elastic polymer) is used for the component materials of the rubber-like elastic member 45, and specifically a thermoplastic elastomer, rubber (according to ASTM for rubber classification) or the like is used. As the thermoplastic elastomer, there is used a styrene-butadienestyrene block copolymer, an epoxidized styrene elastomer, a styrene-isoprene-styrene block copolymer, a hydrogenated styrene block copolymer, a hydrogenated SBC compound, a simple blended olefinic elastomer, a cross-linked elastomer, a vinyl chloride type elastomer, a chlorinated ethylene copolymer crosslinked alloy, a chlorinated polyethylene type elastomer, syndiotactic 1,2-polybutadiene, an urethane type elastomer, a polyester type elastomer, a polyamide type elastomer, a fluorinated elastomer, a silicone type elastomer, or the like.

Rubbers usable include rubber having a polymethylene type saturated main chain, rubber having oxygen in the main chain such as epichlorohydrin rubber, rubber having silicon and oxygen in the main chain such as vinyl methyl silicone rubber, rubber having an unsaturated carbon bond in the main chain such as natural rubber or diene rubber, rubber having carbon, oxygen and nitrogen in the main chain such as polyether urethane, rubber not having oxygen or phosphorus in the main chain but having nitrogen, rubber having sulfur in the main chain such as polysulfide rubber, rubber having phosphorus and nitrogen in the main chain such as phosphagen rubber, and the like.

Rubbers having a saturated main chain include an ethylene-propylene-diene ternary copolymer, an ethylene-propylene copolymer, fully-hydrogenated acrylonitrile-butadiene rubber, fluororubber, fully-hydrogenated styrene-butadiene rubber, fully-hydrogenated styrene-isoprene rubber, and the like. Rubbers having an unsaturated carbon bond in the main chain include butadiene rubber, chloroprene rubber, hydrogenated acrylonitrile-butadiene rubber, isobutene-isoprene rubber, natural rubber, hydrogenated styrene-butadiene rubber, styrene-butadiene rubber, hydrogenated styrene-isoprene rubber, styrene-isoprene rubber, and the like.

A pressing force is applied inwardly to the hook portion 44 by an elastic force of the rubber-like elastic member 45 which is disposed on the outer surface of the outer peripheral portion 33, and the hook portion 44 is also retractable outward. In other words, the hook portion 44 is movable in the radial direction within the outer peripheral portion 33. The rubber-like elastic member 45 applies the pressing force to the hook portion 44 based on the elastic force and allows the hook portion 44 to retract in the radial direction. To enhance the disengagement of the nozzle section 8, a retraction range of the hook portion 44 is preferably determined such that its tip end retracts to the inner wall surface of the outer peripheral portion 33. The rubber-like elastic member 45 can adjust the elastic force to be applied to the hook portion 44 depending on rubber hardness and thickness. Thus, the hook portion 44 can be retracted easily to the inner wall surface of the outer peripheral portion 33.

When the nozzle section 8 is connected to the socket section 4, the nozzle holding mechanism 43 holds the connected state between the nozzle section 8 and the socket section 4 by engaging the hook portion 44 with the peripheral groove 16 which is formed in the outer circumference of the tip end portion 14 of the nozzle head 12. In a normal state, the nozzle section 8 is elastically sandwiched by the pressing force (elastic force) applied to the hook portion 44. If an excessive force of bending, twisting or the like is applied to the fuel cartridge 6 connected to the fuel cell 1, the hook portion 44 retracts to the inner wall surface of the outer peripheral portion 33 according to the elastic force of the rubber-like elastic member 45. Therefore, the connected state between the nozzle section 8 and the socket section 4 is released without damaging the nozzle holding mechanism 43, the socket section 4, the nozzle section 8 and the like.

The outer peripheral portion 33 of the socket body 32 is further provided with a key groove 46 which functions as fuel identification means. The key groove 46 has a shape to engage with the key portion 17 of the nozzle section 8. Since the key portion 17 and the key groove 46 are paired, an injection error of the liquid fuel can be prevented by defining the shape depending on the liquid fuel. The key portion 17 is determined to have a shape complying with a type (type, concentration or the like) of the liquid fuel, and the key groove 46 is determined to have a shape complying with the key portion 17, so that only the fuel cartridge 6 which stores a liquid fuel suitable for the fuel cell 1 can be made connectable. Therefore, since only the liquid fuel suitable for the fuel cell 1 is supplied, it becomes possible to prevent an operation failure, property degradation or the like due to an injection error of the liquid fuel.

To supply the liquid fuel stored in the fuel cartridge 6 to the fuel storing section 3 of the fuel cell 1, the nozzle section 8 of the fuel cartridge 6 is connected by inserting into the socket section 4. The tip end portion 14 formed on the nozzle head 12 of the nozzle section 8 is inserted into the socket section 4 only when the key portion 17 and the key groove 46 have a mutually corresponding shape. Thus, when the tip end portion 14 of the nozzle section 8 is inserted into the nozzle inserting portion 31 of the socket section 4, the tip end of the rubber holder 37 is fitted into the recessed portion 15 formed in the tip end portion 14 to seal the periphery of the liquid fuel passage before the valves 19, 40 are put in an open state.

When the tip end portion 14 of the nozzle head 12 and the rubber holder 37 are in a contacted state, insertion of the nozzle section 8 into the socket section 4 causes to mutually butt the tip ends of the valve stem 19b of the nozzle section 8 and the valve stem 38b of the socket section 4. When the nozzle section 8 is further inserted into the socket section 4, the valve 38 of the socket section 4 retracts to fully open the passage, and the valve 19 of the nozzle section 8 retracts to establish the fuel passage. When the fuel passage is established, the hook portion 44 of the nozzle holding mechanism 43 of the socket section 4 is also engaged with the peripheral groove 16 of the nozzle head 12 to hold the connected state between the nozzle section 8 and the socket section 4.

When the nozzle section 8 and the socket section 4 are connected, the valve mechanisms disposed within them are put in the open state to open the fuel passages so as to supply the liquid fuel stored in the fuel cartridge 6 to the fuel storing section 3 of the fuel cell 1. As described above, the connected state of the nozzle section 8 and the socket section 4 is held as the hook portion 44 is engaged with the peripheral groove 16 to elastically hold the nozzle section 8 between them. Even if an excessive force of bending, twisting or the like is applied to the fuel cartridge 6, retraction of the hook portion 44 to the inner wall surface of the outer peripheral portion 33 prevents damage to the hook portion 44 itself, the socket section 4 and the nozzle section 8.

As described above, if bending, twisting or the like is applied to the fuel cartridge 6, the connected state of the nozzle section 8 by the hook portion 44 is released without applying an excessive force or load to the nozzle holding mechanism 43, and damage to the socket section 4 or the nozzle section 8 involved in the separation of the fuel cartridge 6 can be suppressed. The fuel cartridge 6 to which bending, twisting or the like is applied can be separated from the fuel cell 1 without damaging any part. Thus, damage to the socket section 4 itself of the fuel cell 1, damage to the nozzle section 8 of the fuel cartridge 6, and occurrence of a defect (liquid leakage etc.) due to such damage can be suppressed. Thus, the durability, reliability, safety and the like of the fuel cell 1 can be enhanced.

Besides, when the socket body 32 of the socket section 4 is circumferentially divided into plural (e.g., two), an excessive force or load can be absorbed by the divided socket bodies 32 if bending, twisting or the like is applied to the fuel cartridge 6. For example, the opening of the divided socket bodies 32 is expanded in accordance with the movement of the nozzle section 8, and damage to the socket section 4 or the nozzle section 8 involved in the separation of the fuel cartridge 6 is suppressed. In other words, the fuel cartridge 6 to which bending, twisting or the like is applied can be separated from the fuel cell 1 without damaging any part. Thus, damage to the socket section 4 or the nozzle section 8, and occurrence of a defect (liquid leakage etc.) due to such damage can be suppressed.

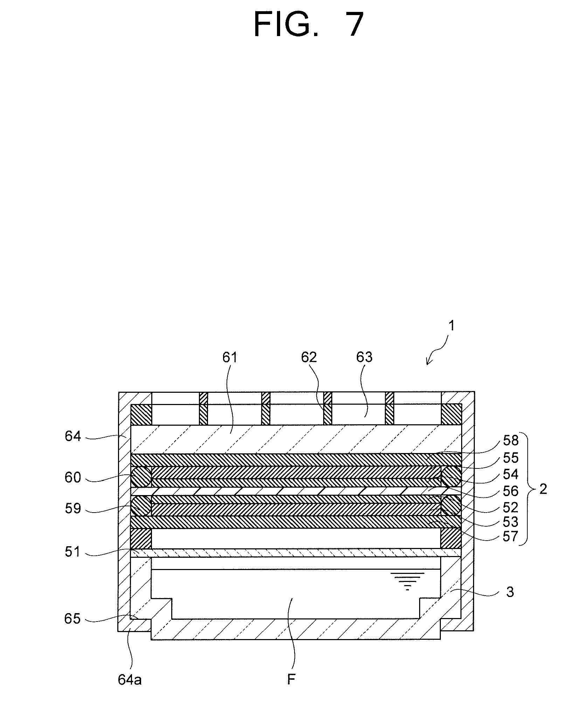

A specific structure of the power generation section and the like in the fuel cell 1 of the above-described embodiment is described below. The fuel cell 1 is not limited to a particular type. For the fuel cell 1, a passive or active DMFC to which a satellite type of fuel cartridge 6 is connected if necessary can be applied. An embodiment that the internal vaporization type DMFC is applied to the fuel cell 1 is described below with reference to Fig. 7.

The internal vaporization type (passive type) DMFC 1 shown in Fig. 7 is further provided with a gas-liquid separation film 51 which is interposed between the power generation section 2 and the fuel storing section 3. The power generation section 2 is provided with a membrane electrode assembly (MEA) which is composed of an anode (fuel electrode) having an anode catalyst layer 52 and an anode gas diffusion layer 53, a cathode (oxidant electrode/air electrode) having a cathode catalyst layer 54 and a cathode gas diffusion layer 55, and a proton (hydrogen ion) conductive electrolyte membrane 56 sandwiched between the anode catalyst layer 52 and the cathode catalyst layer 54.

Examples of the catalyst contained in the anode catalyst layer 52 and the cathode catalyst layer 54 include a single element of platinum group elements such as Pt, Ru, Rh, Ir, Os, Pd, etc., an alloy containing a platinum group element, and the like. For the anode catalyst layer 52, it is preferable to use Pt-Ru, Pt-Mo or the like which has high resistance to methanol and carbon monoxide. It is preferable to use Pt, Pt-Ni or the like for the cathode catalyst layer 54. The catalyst may be a supported catalyst using a conductive carrier such as carbon material or an unsupported catalyst.

Examples of the proton conductive material configuring the electrolyte membrane 56 include a fluorine-based resin such as a perfluorosulfonic acid polymer having a sulfonic group, a hydrocarbon-based resin having the sulfonic group, an inorganic substance such as tungsten acid or phosphotungstic acid, and the like. Specific examples of the fluorine-based resin having a sulfonic group include Nafion (trade name, a product of DuPont), Flemion (trade name, a product of Asahi Glass) and the like. But, they are not used exclusively.

The anode gas diffusion layer 53 superposed on the anode catalyst layer 52 serves to uniformly supply the fuel to the anode catalyst layer 52 and also has a function to serve as a power collector of the anode catalyst layer 52. The cathode gas diffusion layer 55 superposed on the cathode catalyst layer 54 serves to uniformly supply an oxidant to the cathode catalyst layer 54 and also serves as a power collector of the cathode catalyst layer 54. An anode conductive layer 57 is superposed on the anode gas diffusion layer 53. A cathode conductive layer 58 is superposed on the cathode gas diffusion layer 55.

The anode conductive layer 57 and the cathode conductive layer 58 are configured of, for example, a mesh, a porous film, a thin film or the like which is formed of a conductive metal material such as Au. Besides, rubber O-rings 59, 60 are interposed between the electrolyte membrane 56 and the anode conductive layer 57 and between the electrolyte membrane 56 and the cathode conductive layer 58, respectively. They prevent the fuel and the oxidant from leaking from the power generation section 2.

A methanol fuel is filled as a liquid fuel F in the fuel storing section 3. The fuel storing section 3 has an opening on the side of the power generation section 2 and the gas-liquid separation film 51 disposed between the opening portion of the fuel storing section 3 and the power generation section 2. The gas-liquid separation film 51 is a film which allows the passage of only the vaporized component of the liquid fuel F but does not allow the passage of the liquid component. The component materials of the gas-liquid separation film 51 include, for example, a fluorine resin such as polytetrafluoroethylene. The vaporized component of the liquid fuel F means a gas mixture which consists of a vaporized component of methanol and a vaporized component of water when the aqueous methanol solution is used as the liquid fuel F, and means a vaporized component of methanol when pure methanol is used.

A moisture retaining layer 61 is superposed on the cathode conductive layer 58, and a surface layer 62 is further superposed on it. The surface layer 62 has a function to adjust an introduced volume of air which is an oxidant, and its adjustment is performed by changing the quantity, size and the like of air introduction ports 63 formed in the surface layer 62. The moisture retaining layer 61 serves to suppress water evaporation by partial impregnation of water generated by the cathode catalyst layer 54 and also has a function to promote uniform diffusion of the oxidant to the cathode catalyst layer 54 by uniform introduction of the oxidant into the cathode gas diffusion layer 55. For example, the moisture retaining layer 61 is formed of a member having a porous structure. Specific component materials for the moisture retaining layer 61 include a porous body or the like of polyethylene or polypropylene.

The gas-liquid separation film 51, the power generation section 2, the moisture retaining layer 61 and the surface layer 62 are sequentially stacked on the fuel storing section 3, and they are entirely covered with a stainless steel cover 64 to configure the passive type DMFC 1. The cover 64 is provided with openings at portions corresponding to the air introduction ports 63 formed in the surface layer 62. The fuel storing section 3 is provided with a terrace 65 for receiving fixture portions 64a of the cover 64, and the terrace 65 is caught by caulking the fixture portions 64a to entirely hold the fuel cell 1 by the cover 64. It is not shown in Fig. 7, but the fuel supply section 5 having the socket section 4 is provided on the under surface of the fuel storing section 3 as shown in Fig. 1.

According to the passive DMFC (fuel cell) 1 having the structure described above, the liquid fuel F (e.g., the aqueous methanol solution) in the fuel storing section 3 is vaporized, and the vaporized component is supplied to the power generation section 2 through the gas-liquid separation film 51. In the power generation section 2, the vaporized component of the liquid fuel F is diffused by the anode gas diffusion layer 53 and supplied to the anode catalyst layer 52. The vaporized component supplied to the anode catalyst layer 52 causes an internal reforming reaction of methanol expressed by the following formula (1).

CH₃OH+H₂O → CO₂+6H⁺+6e⁻ (1)

When pure methanol is used as the liquid fuel F, steam is not supplied from the fuel storing section 3, so that water produced by the cathode catalyst layer 54 and water in the electrolyte membrane 56 are reacted with methanol to cause the internal reforming reaction expressed by the formula (1). Otherwise, an internal reforming reaction is caused by another reaction mechanism not requiring water without depending on the above-described internal reforming reaction of the formula (1).

Proton (H⁺) produced by the internal reforming reaction reaches the cathode catalyst layer 54 through the electrolyte membrane 56. Air (oxidant) introduced through the air introduction ports 63 of the surface layer 62 is diffused into the moisture retaining layer 61, the cathode conductive layer 58 and the cathode gas diffusion layer 55 and supplied to the cathode catalyst layer 54. The air supplied to the cathode catalyst layer 54 causes the reaction expressed by following formula (2). This reaction causes a power generation reaction involving the generation of water.

(3/2)O₂+6H⁺+6e⁻ → 3H₂O (2)

With the progress of the power generation reaction based on the above-described reaction, the liquid fuel F (e.g., an aqueous methanol solution and pure methanol) in the fuel storing section 3 is consumed. Since the power generation reaction stops when the liquid fuel F in the fuel storing section 3 is exhausted, the liquid fuel is supplied from the fuel cartridge 6 into the fuel storing section 3 at that time or before that. The supply of the liquid fuel from the fuel cartridge 6 is performed with the nozzle section 8 on the side of the fuel cartridge 6 connected to the socket section 4 on the side of the fuel cell 1 by inserting into it as described above.

The present invention is not limited to any method, mechanism or the like of a fuel cell if the fuel cell supplies the liquid fuel by means of the fuel cartridge. The present invention is particularly suitable for a passive DMFC which is under downsizing. The fuel cell is not limited to a particular structure either, and in a practical phase, it can be materialized with the component elements modified within the scope of technical idea of the present invention. Besides, various modifications such as an appropriate combination of the plural component elements described in the above embodiments, deletion of some component elements from the whole component elements shown in the embodiments, or the like can be made. The embodiments of the present invention can be expanded or modified within the scope of technical idea of the present invention, and the expanded and modified embodiments are also included in the technical scope of the invention.

### Industrial Applicability

A fuel cell coupler according to an embodiment of the present invention has a hook portion of a nozzle holding mechanism disposed in a socket section provided to be retractable to the outside of a socket body. Therefore, if a force of bending, twisting or the like is applied to a fuel cartridge with a nozzle section connected to a socket section, the connected state of the socket section and the nozzle section can be released without damaging them. A fuel cell applying such a fuel cell coupler excels in durability, reliability, safety and the like and can be used effectively as a power source for various types of devices and equipment.

## Claims

1. A fuel cell coupler, comprising:
a socket section, detachably connected with a nozzle section to be fitted to a fuel cartridge, including a socket body set in a fuel cell and a valve mechanism disposed within the socket body,
wherein the socket section is provided with a nozzle holding mechanism having a hook portion protruded inward of the socket body and retractable outward of the socket body, and an elastic body applying a pressing force to the hook portion to hold the nozzle section and allowing retraction of the hook portion.

2. The fuel cell coupler according to claim 1, wherein the socket body has a substantially cylindrical shape, and the hook portion is retractable in a radial direction of the socket body.

3. The fuel cell coupler according to claim 1,
wherein a tip end of the hook portion is retractable to an inner wall surface of the socket body.

4. The fuel cell coupler according to claim 1,
wherein the hook portion has a projecting portion which is protruded inward of the socket body, and a flange portion which is disposed on an outer surface of the socket body to hold a posture of the projecting portion.

5. The fuel cell coupler according to claim 1,
wherein the elastic body includes a rubber-like elastic member which is disposed on an outer surface of the socket body.

6. The fuel cell coupler according to claim 2,
wherein the elastic body includes a rubber-like elastic member having a sleeve shape disposed along a circumferential direction of an outside wall surface of the socket body.

7. The fuel cell coupler according to claim 6,
wherein the socket body has a lib defining an arranged position of the rubber-like elastic member.

8. The fuel cell coupler according to claim 1,
wherein the hook portion is engaged with a recessed portion formed in the nozzle section.

9. The fuel cell coupler according to claim 1,
wherein the socket section is provided with an elastic body holder for sealing between an outside and a fuel passage when the valve mechanism is opened.

10. The fuel cell coupler according to claim 1,
wherein the valve mechanism is provided with a valve having a valve head and a valve stem, and an elastic member which holds a fuel passage in the socket section in a closed state by pressing the valve head to a valve seat disposed within the socket body.

11. The fuel cell coupler according to claim 1, further comprising:
a fuel identification portion for identifying a type of a liquid fuel.

12. A fuel cell, comprising:
a socket section, detachably connected to a nozzle section of a fuel cartridge, including a socket body, a valve mechanism disposed in the socket body, and a nozzle holding mechanism having a hook portion protruded inward of the socket body and retractable outward of the socket body and an elastic body applying a pressing force to the hook portion to hold the nozzle section and allowing retraction of the hook portion;
a fuel storing section for storing the liquid fuel supplied from the fuel cartridge connected to the socket section; and
a power generation section for performing a power generation operation by receiving the fuel from the fuel storing section.

13. The fuel cell according to claim 12,
wherein the power generation section is provided with a fuel electrode, an oxidant electrode, and an electrolyte membrane which is interposed between the fuel electrode and the oxidant electrode.

14. The fuel cell according to claim 12, further comprising:
a gas-liquid separation film, interposed between the fuel storing section and the power generation section, supplying a vaporized component of the liquid fuel to the fuel electrode.

15. The fuel cell according to claim 12,
wherein a tip end of the hook portion is retractable to a inner wall surface of the socket body.

16. The fuel cell according to claim 12,
wherein the hook portion is provided with a projecting portion which is protruded inward of the socket body, and a flange portion disposed on an outer surface of the socket body to hold a posture of the projecting portion.

17. The fuel cell according to claim 12,
wherein the elastic body includes a rubber-like elastic member which is disposed on an outer surface of the socket body.

18. The fuel cell according to claim 12,
wherein the hook portion is engaged with a recessed portion formed in the nozzle section.
